# EUROPEAN PATENT APPLICATION

(11) **EP 4 431 922 A1**
(43) Date of publication of application: **18.09.2024**
(21) Application number: 24162267.9
(22) Date of filing: 08.03.2024
(51) Int. Cl.: G01N 21/88, G01N 21/95

(54) **CAR BODY INSPECTION DEVICE AND CAR BODY INSPECTION METHOD**

(30) Priority: 17.03.2023 JP 2023043480; 26.09.2023 JP 2023163235
(71) Applicant: Ricoh Company, Ltd., Tokyo 143-8555 (JP)
(72) Inventor: HIRAKAWA, Makoto, Tokyo, 143-8555 (JP); KAMADA, Teruki, Tokyo, 143-8555 (JP); KUMAGAI, Masaru, Tokyo, 143-8555 (JP); HINO, Makoto, Tokyo, 143-8555 (JP); HIRAYAMA, Rie, Tokyo, 143-8555 (JP)
(74) Representative: SSM Sandmair

(57) **Abstract**

A car body inspection device (1) includes an illuminator (10) to emit light to an inspection surface of a car body that is conveyed; an image-capturing unit (20) to capture an image of the inspection surface illuminated with the light emitted from the illuminator (10); and a defect detector (30) to detect a defect of the inspection surface with the image captured by the imager (20). The illuminator (10) is spaced apart from the car body and located on a first surface side of the car body. The imager (20) is spaced apart from the car body and located on a second surface side opposite the first surface side with the car body intervening between the first surface side and the second surface side.

## Description

### BACKGROUND

### Technical Field

The present disclosure relates to a car body inspection device and a car body inspection method.

### Related Art

An inspection device is known in which an illumination device and a camera are installed on a lateral side of an inspection line to perform an appearance inspection on a side surface of a car body while the car body is conveyed in a predetermined conveyance direction. (see, for example, Japanese Unexamined Patent Application Publication No. 2014-81356).

However, the inspection device of the related art conveys the car body also in another direction in accordance with the position of an inspection surface of the car body.

### SUMMARY

In view of the above, an object of the present disclosure is to provide a car body inspection device that can easily inspect a car body.

According to an embodiment of the present disclosure, a car body inspection device includes an illuminator to emit light to an inspection surface of a car body conveyed in one direction; an imager to capture an image of the inspection surface illuminated with the light emitted from the illuminator; and a defect detector to detect a defect of the inspection surface with the image captured by the imager. The illuminator is spaced apart from the car body and located on a first surface side of the car body. The imager is spaced apart from the car body and located on a second surface side opposite the first surface side with the car body intervening between the first surface side and the second surface side.

According to an embodiment of the present disclosure, a car body inspection method includes emitting light to an inspection surface of a car body from a first position apart from the car body and on a first surface side of the car body; capturing an image of the inspection surface illuminated with the light emitted in the emitting at a second position apart from the car body and on a second surface side opposite the first surface side with the car body intervening between the first surface side and the second surface side; and detecting a defect of the inspection surface with the image captured in the capturing.

With the embodiment of the present disclosure, a car body can be easily inspected.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating an example of a configuration of a car body inspection device according to a first embodiment of the disclosure;
FIG. 2 is a projection diagram of a first illumination unit and a first image-capturing unit of the car body inspection device according to the first embodiment of the disclosure projected on a plane including a rear surface of a car body;
FIG. 3 is a block diagram illustrating an example of hardware configurations of a defect detector and a controller of the car body inspection device according to the first embodiment of the disclosure;
FIG. 4 is a block diagram illustrating an example of a functional configuration of the defect detector of the car body inspection device according to the first embodiment of the disclosure;
FIG. 5 is a block diagram illustrating an example of a functional configuration of the controller of the car body inspection device according to the first embodiment of the disclosure;
FIG. 6 is a flowchart presenting a car body inspection method according to the first embodiment of the disclosure;
FIG. 7 is a schematic diagram illustrating an example of a configuration of a car body inspection device according to a modification of the first embodiment of the disclosure;
FIG. 8 is a schematic diagram illustrating an example of a configuration of a car body inspection device according to a second embodiment of the disclosure;
FIG. 9 is a projection diagram of a second illumination unit and a second image-capturing unit of the car body inspection device according to the second embodiment of the disclosure projected on a plane including an upper surface of a car body;
FIG. 10 is a schematic diagram illustrating an example of a configuration of a car body inspection device according to a third embodiment of the disclosure;
FIG. 11 is a projection diagram of a third illumination unit and a third image-capturing unit of the car body inspection device according to the third embodiment of the disclosure projected on a plane including a side surface of a car body;
FIG. 12 is a schematic diagram illustrating an example of a configuration of a car body inspection device according to a fourth embodiment of the disclosure; and
FIG. 13 is a schematic diagram illustrating another example of the configuration of the car body inspection device according to the fourth embodiment of the disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a", "an", and "the" are intended to include the plural forms as well, unless the context clearly indicates otherwise.

Embodiments of the present disclosure are described referring to the drawings. Like reference signs are applied to identical or corresponding components throughout the drawings and redundant description thereof may be omitted.

### First Embodiment

### General Arrangement of Car Body Inspection Device 1

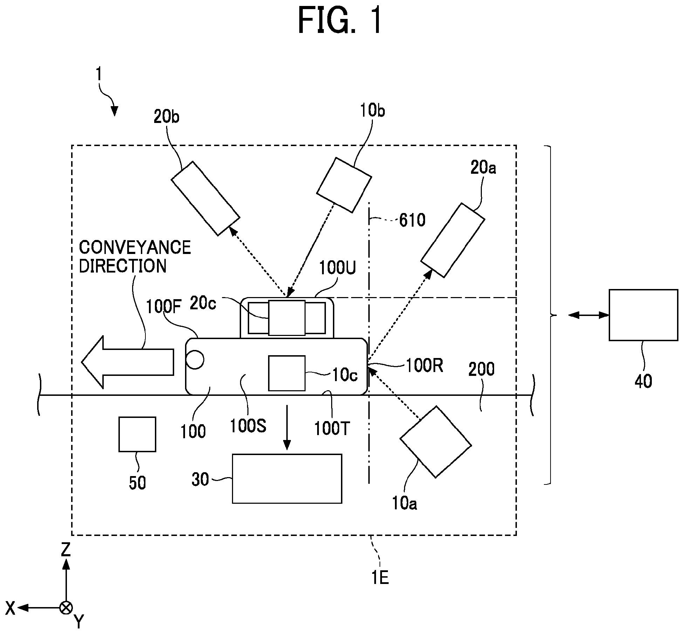

An example of a general arrangement of a car body inspection device 1 according to a first embodiment of the disclosure is described referring to FIG. 1. FIG. 1 is a schematic diagram illustrating an example of a configuration of the car body inspection device 1 according to the first embodiment of the disclosure. FIG. 1 includes a side view of a car body 100 to be inspected.

An X direction illustrated in FIG. 1 corresponds to a front-rear direction of the car body 100 to be inspected. A Y direction corresponds to a width direction of the car body 100. A Z direction corresponds to an up-down direction of the car body 100. The X direction, the Y direction, and the Z direction are orthogonal to one another. A conveyance direction of the car body 100 corresponds to the X direction directed from a rear surface 100R toward a front surface 100F of the car body 100.

The car body inspection device 1 includes a first illumination unit 10a, a second illumination unit 10b, a third illumination unit 10c, a first image-capturing unit 20a (or a first imager), a second image-capturing unit 20b (or a second imager), a third image-capturing unit 20c (or a third imager), a defect detector 30, a controller 40, and a car body sensor 50. The car body inspection device 1 is disposed near a conveyance unit 200 that conveys the car body 100 to be inspected. The car body inspection device 1 inspects the car body 100 in an inspection region 1E. The car body 100 is a body of a painted automobile, such as a large, ordinary, or small automobile. The car body 100 in FIG. 1 has a rear surface 100R, an upper surface 100U, a side surface 100S, and a bottom surface 100T.

The rear surface 100R is an area including surfaces of a trunk lid, a rear bumper, and so forth disposed on a rear side of the car body 100. The upper surface 100U is an area including surfaces of a roof and so forth disposed on an upper side of the car body 100. The side surface 100S is an area including surfaces of a side door, a fender, a side sill, a pillar, and so forth disposed on a lateral side of the car body 100.

The conveyance unit 200 is, for example, a belt conveyor or a roller conveyor. In the example illustrated in FIG. 1, the first illumination unit 10a, the second illumination unit 10b, and the third illumination unit 10c are illustrated as an illumination unit 10 (or an illuminator). The first image-capturing unit 20a, the second image-capturing unit 20b, and the third image-capturing unit 20c are illustrated as an image-capturing unit 20 (or an imager). In the following description, the first illumination unit 10a, the second illumination unit 10b, and the third illumination unit 10c are referred to as multiple illumination units 10 as appropriate. The first image-capturing unit 20a, the second image-capturing unit 20b, and the third image-capturing unit 20c are referred to as multiple image-capturing units 20 (or imagers) as appropriate.

Each of the multiple illumination units 10 illuminates an inspection surface of the car body 100. For example, the first illumination unit 10a illuminates the rear surface 100R of the car body 100 as an inspection surface. The second illumination unit 10b illuminates the upper surface 100U of the car body 100 as an inspection surface. The third illumination unit 10c illuminates the side surface 100S of the car body 100 as an inspection surface.

However, the number of the illumination units 10 is not limited to three. That is, the car body inspection device 1 may further include another illumination unit 10 for illuminating another area, such as the front surface 100F of the car body 100, or may use some of the three illumination units in common. The front surface 100F is, for example, an area including surfaces of a hood, a bumper, and so forth disposed on a front side of the car body 100.

In the configuration illustrated in FIG. 1, each inspection surface is illuminated by one illumination unit 10; however, the number of illumination units 10 that illuminate each inspection surface is not limited. For example, the rear surface 100R may be illuminated by multiple illumination units 10. The upper surface 100U may be illuminated by multiple illumination units 10. The side surface 100S may be illuminated by multiple illumination units 10.

When multiple illumination units 10 illuminate the rear surface 100R, all the multiple illumination units 10 that illuminate the rear surface 100R may be referred to as "first illumination units 10a". When multiple illumination units 10 illuminate the upper surface 100U, all the multiple illumination units 10 that illuminate the upper surface 100U may be referred to as "second illumination units 10b". When multiple illumination units 10 illuminate the side surface 100S, all the multiple illumination units 10 that illuminate the side surface 100S may be referred to as "third illumination units 10c". The same applies to the illumination unit 10 that illuminates the front surface 100F.

Each of the multiple illumination units 10 includes a light source. Examples of the light source include a semiconductor light-emitting element, such as a light-emitting diode (LED); a fluorescent lamp; and a halogen lamp. The light source desirably emits visible light; however, the light source may emit light in another wavelength band, such as infrared light. Each of the multiple illumination units 10 may include one light source, or may include multiple light sources.

Each of the multiple illumination units 10 may further include various optical members, such as a diffusion plate, a reflecting plate, and a lens element. Each of the multiple illumination units 10 according to the first embodiment diffuses light emitted from a LED using the diffusion plate, and illuminates a corresponding inspection surface with parallel illumination light having no irradiation unevenness.

The multiple image-capturing units 20 capture images of the inspection surfaces illuminated by the multiple illumination units 10.

The first image-capturing unit 20a is disposed on the rear side of the car body 100, and captures an image of the rear surface 100R illuminated by the first illumination unit 10a. The second image-capturing unit 20b is disposed on the upper side of the car body 100, and captures an image of the upper surface 100U illuminated by the second illumination unit 10b. The third image-capturing unit 20c is disposed on the lateral side of the car body 100, and captures an image of the side surface 100S illuminated by the third illumination unit 10c.

The number of the multiple image-capturing units 20 is not limited to three. That is, the car body inspection device 1 may further include, for example, another image-capturing unit 20 that captures an image of the front surface 100F of the car body 100, or some of the three image-capturing units may be used in common.

In the configuration illustrated in FIG. 1, one image-capturing unit 20 captures an image of an inspection surface; however, the number of image-capturing units 20 that capture images of an inspection surface is not limited. For example, multiple image-capturing units 20 may capture images of the rear surface 100R. Multiple image-capturing units 20 may capture images of the upper surface 100U. Multiple image-capturing units 20 may capture images of the side surface 100S.

When multiple image-capturing units 20 capture images of the rear surface 100R, all the multiple image-capturing units 20 that capture the images of the rear surface 100R may be referred to as "first image-capturing units 20a". When multiple image-capturing units 20 capture images of the upper surface 100U, all the multiple image-capturing units 20 that capture the images of the upper surface 100U may be referred to as "second image-capturing units 20b". When multiple image-capturing units 20 capture images of the side surface 100S, all the multiple image-capturing units 20 that capture the images of the side surface 100S may be referred to as "third image-capturing units 20c". The same applies to the image-capturing unit 20 that captures an image of the front surface 100F.

The car body inspection device 1 further incudes: multiple inspection surfaces (e.g., inspection surfaces 100R, 100U, 100S) including the inspection surface, each of the multiple inspection surfaces extending in a direction perpendicular to a conveyance direction in which the car body is conveyed; multiple illuminators including the illuminator (e.g., the illumination unit 10); and multiple imagers including the imager (e.g., the image-capturing unit 20). The multiple illuminators include a first illuminator (e.g., a first illumination unit 10a) to emit light to a first inspection surface of the multiple inspection surfaces; and a second illuminator (e.g., a second illumination unit 10b) to emit light to a second inspection surface of the multiple inspection surfaces. The multiple imagers include a first imager (e.g., a first image-capturing unit 20a) to capture an image of the first inspection surface illuminated with the light emitted from the first illuminator (e.g., the first illumination unit 10a); and a second imager (e.g., a second image-capturing unit 20b) to capture an image of the second inspection surface illuminated with the light emitted from the second illuminator (e.g., the second illumination unit 10b).

Each of the multiple image-capturing units 20 includes an imaging element, such as a charge coupled device (CCD) or a complementary metal-oxide-semiconductor (CMOS). Each of the multiple image-capturing units 20 further includes an optical member such as a condenser lens for forming an image of incident light on the imaging element.

An example of the image-capturing unit 20 is a visible light camera.

Optical conditions such as the angle of view of the condenser lens and the image-capturing magnification of each image-capturing unit 20 may be appropriately adjusted in accordance with, for example, the size of an inspection surface to be image-captured by the image-capturing unit 20, and the distance between the image-capturing unit 20 and the inspection surface.

Each of the multiple image-capturing units 20 outputs image data of the image-captured inspection surface to the defect detector 30. Specifically, the first image-capturing unit 20a outputs image data of the rear surface 100R to the defect detector 30. The second image-capturing unit 20b outputs image data of the upper surface 100U to the defect detector 30. The third image-capturing unit 20c outputs image data of the side surface 100S to the defect detector 30.

The defect detector 30 detects a defect of the image-captured inspection surfaces. Specifically, the defect detector 30 is an information processing device such as a personal computer (PC) that performs image processing on image data acquired from the image-capturing units 20. The defect detector 30 analyzes image data of the inspection surface acquired from each of the multiple image-capturing units 20 to detect a defect of the inspection surface. In this case, the "defect" represents a scratch, a crack, an unevenness, a stain, or a discoloration failure formed in the inspection surface.

The defect detector 30 of the first embodiment is electrically connected to all the multiple image-capturing units 20.

That is, one defect detector 30 detects, for example, a defect of the rear surface 100R, a defect of the upper surface 100U, and a defect of the side surface 100S.

However, the configuration is not limited to the above, and the car body inspection device 1 may include multiple defect detectors 30. Each of the multiple defect detectors 30 may be electrically connected to different one of the image-capturing units 20. For example, one of the multiple defect detectors 30 is electrically connected to the first image-capturing unit 20a and detects a defect of the rear surface 100R. Another one of the multiple defect detectors 30 is electrically connected to the second image-capturing unit 20b and detects a defect of the upper surface 100U. Still another one of the multiple defect detectors 30 is electrically connected to the third image-capturing unit 20c and detects a defect of the side surface 100S.

The controller 40 controls the car body inspection device 1. The controller 40 is a control device, such as a PC or a programmable logic computer (PLC), that is electrically connected to the multiple illumination units 10 and the multiple image-capturing units 20. The controller 40 is electrically connected to the car body sensor 50. The controller 40 controls each of the multiple illumination units 10 and each of the multiple image-capturing units 20 in accordance with a detection signal output from the car body sensor 50.

The controller 40 illustrated in FIG. 1 is a device different from the defect detector 30; however, the controller 40 may be integrated with the defect detector 30. For example, the controller 40 may include the defect detector 30. That is, the defect detector 30 may serve as a functional unit of the controller 40.

The car body sensor 50 detects a car body. Specifically, the car body sensor 50 is a sensor that detects the car body 100 that is conveyed by the conveyance unit 200. The type of the car body sensor 50 is not particularly limited. Examples of the car body sensor 50 include an optical sensor, an image sensor, and a distance sensor. The car body sensor 50 is desirably disposed in the inspection region 1E to increase detection accuracy for the car body 100. However, the position at which the car body sensor 50 is disposed is not particularly limited as long as the position is within a range in which the car body 100 is detectable.

The car body inspection device further includes multiple inspection surfaces (e.g., the rear surface 100R, the upper surface 100U, the side surface 100S) including the inspection surface, each of the multiple inspection surfaces extending in a direction perpendicular to the one direction in which the car body is conveyed; multiple illuminators including the illuminator (e.g., the illumination unit 10); and multiple imagers including the imager (e.g., the image-capturing unit 20). The multiple illuminators include a first illuminator (e.g., the first illumination unit 10a) to emit light to a first inspection surface of the multiple inspection surfaces; and a second illuminator (e.g., the second illumination unit 10b) to emit light to a second inspection surface different from the first inspection surface of the multiple inspection surfaces. The multiple imagers include a first imager (i.e., the first image-capturing unit 20a) to capture an image of the first inspection surface illuminated with the light emitted from the first illuminator; and a second imager (i.e., the second image-capturing unit 20b) to capture an image of the second inspection surface illuminated with the light emitted from the second illuminator.

### Positional Relationship among First Illumination Unit, First Image-capturing Unit, and Car Body

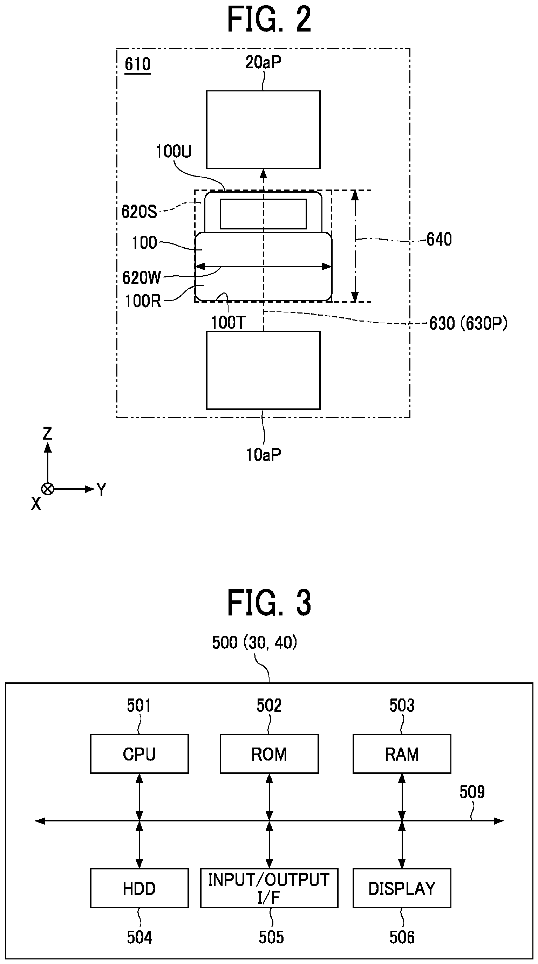

An example of the positional relationship among the first illumination unit 10a, the first image-capturing unit 20a, and the car body 100 in the car body inspection device 1 is described next referring to FIG. 2. FIG. 2 is a projection diagram of the first illumination unit 10a and the first image-capturing unit 20a of the car body inspection device 1 according to the first embodiment of the disclosure projected on a plane 610 including the rear surface 100R of the car body 100. FIG. 2 illustrates a projection image 10aP, a projection image 20aP, a conveyance region 620S, a direction 620W, a light path 630, and a length 640 in contrast to FIG. 1. The projection image 10aP and the projection image 20aP are projection images of the first illumination unit 10a and the first image-capturing unit 20a, respectively. The projection image is an image of a projection object appearing on the plane 610 when the projection object, such as the first illumination unit 10a or the first image-capturing unit 20a, is illuminated with virtual illumination provided to directly face the plane 610.

The conveyance region 620S is a region in which the car body 100 is conveyed by the conveyance unit 200. The direction 620W is a direction intersecting with the conveyance direction of the car body 100. The direction 620W illustrated in FIG. 2 corresponds to the rear surface 100R in a horizontal direction intersecting with the conveyance direction of the car body 100. The direction 620W corresponds to an inspection surface.

To inspect the rear surface 100R without changing the conveyance direction of the car body 100, the first illumination unit 10a and the first image-capturing unit 20a are disposed outside the conveyance region 620S of the car body 100.

Specifically, at least one pair of a first illumination unit 10a and a first image-capturing unit 20a are spaced apart from the car body 100 and respectively located on a first surface side and a second surface side with the car body 100 interposed. In other words, the illuminator (e.g., the illumination unit 10) and the imager (e.g., the image-capturing unit 20) are spaced apart from the car body and respectively located on a first surface side and a second surface side opposite the first surface side of the car body.

The configuration of the at least one pair of the first illumination unit 10a and the first image-capturing unit 20a may be a pair of a first image-capturing unit 20a including one camera and a first illumination unit 10a including multiple light sources.

The projection image 10aP of the first illumination unit 10a and the projection image 20aP of the first image-capturing unit 20a projected on the plane 610 including the rear surface 100R are spaced apart from the car body 100 and respectively located on the first surface side and the second surface side of the car body 100.

That is, the first illumination unit 10a is disposed downward of the bottom surface 100T of the car body 100. The first image-capturing unit 20a is disposed upward of the upper surface 100U of the car body 100. In this case, the "first surface side" of the car body 100 corresponds to a lower side of the car body 100. In other words, the first surface side refers to a region below the car body. An "end portion of the first surface side of the car body 100" corresponds to the bottom surface 100T of the car body 100. In contrast, the "second surface side" with respect to the car body 100 corresponds to an upper side of the car body 100. In other words, the second surface side refers to a region above the car body. An "end portion of the second surface side of the car body 100" corresponds to the upper surface 100U of the car body 100. However, when the first illumination unit 10a is disposed upward of the upper surface 100U of the car body 100 and the first image-capturing unit 20a is disposed downward of the bottom surface 100T of the car body 100, the "first surface side" corresponds to the upper side of the car body 100, and the "second surface side" corresponds to the lower side of the car body 100.

The light path 630 is a light path from emission of light from the first illumination unit 10a to incidence of the light on the first image-capturing unit 20a. The length 640 indicates a distance from the end portion of the first surface side to the end portion of the second surface side of the car body 100 as a predetermined length of the car body 100. The length 640 illustrated in FIG. 2 is a total height that is a distance between a ground plane and a horizontal plane in contact with the highest portion of the car body 100, and is a length from the lower side to the upper side of the car body 100. The length 640 may be in a state in which tires are attached to the car body 100 or in a state in which the tires are not attached to the car body 100. The light path 630 is longer than the length 640. More precisely, the length of a projection line 630P of the light path 630 projected on the plane 610 is larger than the length 640. In other words, a light path of the light emitted from the illuminator (e.g., the illumination unit 10) and incident on the imager (e.g., the image-capturing unit 20) is longer than a length between an end of the first surface side and an end of the second surface side of the car body.

Since the first illumination unit 10a and the first image-capturing unit 20a are disposed in this way, an appearance inspection can be performed on each of the surfaces of the car body 100 including the rear surface 100R without the first illumination unit 10a and the first image-capturing unit 20a each colliding with the car body 100 that is conveyed by the conveyance unit 200. That is, simply by conveying the car body 100 in one conveyance direction, the appearance inspection can be performed on each of the surfaces of the car body 100. Consequently, the time for the appearance inspection can be reduced, and productivity of the car body 100 can be increased.

In particular, with the car body inspection device 1 according to the first embodiment, the rear surface 100R including an area perpendicular to the conveyance direction can be inspected together with the other surfaces of the car body 100. Thus, the conveyance direction of the car body 100 does not have to be changed from the conveyance direction in a typical inspection line. That is, an existing inspection line can be used without a change, thereby avoiding an excessive increase in cost due to, for example, an improvement in inspection equipment.

### Hardware Configurations of Defect Detector and Controller

Hardware configurations of the defect detector 30 and the controller 40 are described next referring to FIG. 3. FIG. 3 is a block diagram illustrating an example of hardware configurations of the defect detector 30 and the controller 40 of the car body inspection device 1 according to the first embodiment of the disclosure.

Each of the defect detector 30 and the controller 40 is constructed by, for example, a computer 500. The computer 500 includes a central processing unit (CPU) 501, a read only memory (ROM) 502, a random access memory (RAM) 503, a hard disk drive (HDD) 504, an input/output interface (I/F) 505, and a display 506. These components are electrically connected to one another via a bus 509.

The CPU 501 controls the operation of the computer 500. The ROM 502 stores a program or the like that is executed in the CPU 501. The RAM 503 is used as a work area for the CPU 501. The HDD 504 stores various data such as a program. The input/output I/F 505 is an interface that inputs or outputs various signals or data from or to an external device. The display 506 displays various items of information such as characters or images.

In one example, part or all of the functions of the CPU 501 may be implemented by an electronic circuit, such as an application specific integrated circuit (ASIC) or a field-programmable gate array (FPGA).

### Functional Configuration of Defect Detector

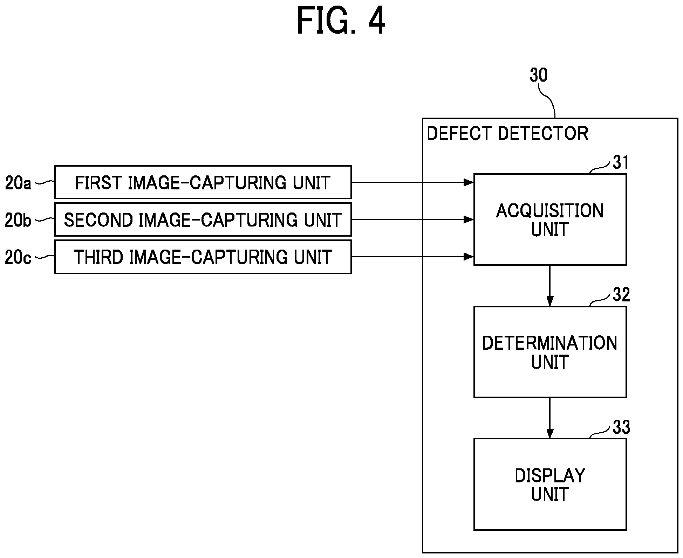

An example of a functional configuration of the defect detector 30 is described next referring to FIG. 4. FIG. 4 is a block diagram illustrating an example of a functional configuration of the defect detector 30 of the car body inspection device 1 according to the first embodiment of the disclosure.

The defect detector 30 includes an acquisition unit 31, a determination unit 32, and a display unit 33. The defect detector 30 is connected to the multiple image-capturing units 20. The acquisition unit 31 is implemented by, for example, the input/output I/F 505 of the computer 500. The determination unit 32 is implemented by, for example, the CPU 501 of the computer 500. The display unit 33 is implemented by, for example, the display 506 of the computer 500.

The acquisition unit 31 acquires image data of inspection surfaces output from the multiple image-capturing units 20. Specifically, the acquisition unit 31 acquires image data of the rear surface 100R output from the first image-capturing unit 20a. The acquisition unit 31 acquires image data of the upper surface 100U output from the second image-capturing unit 20b. The acquisition unit 31 acquires image data of the side surface 100S output from the third image-capturing unit 20c. The acquisition unit 31 outputs the acquired image data of the inspection surfaces to the determination unit 32.

The determination unit 32 analyzes each image data acquired by the acquisition unit 31 and determines whether each inspection surface includes a defect. The determination unit 32 executes, for example, a process of extracting a feature value such as the size of a defect of the inspection surface included in the image data acquired by the acquisition unit 31, and a process of determining the presence of a defect based on the extracted feature value. The determination unit 32 may execute a noise reduction process or the like on the image data as a pre-process before the feature value extraction process is executed.

The determination unit 32 may determine a defect of the inspection surface from measurement data obtained by using a three-dimensional measurement method, such as a phase shift method, a light section method, or a time of flight (ToF) method. When the three-dimensional measurement method is used, the illumination unit 10 and the image-capturing unit 20 appropriately include optical members or elements suitable for execution of the three-dimensional measurement method.

When the three-dimensional measurement method is used, the determination unit 32 may include a calculation unit that calculates information on, for example, the posture or position of the inspection surface such as the rear surface 100R. Specifically, the calculation unit may calculate information on, for example, the posture or position of the inspection surface based on a combination of point group data constructed from measurement data at multiple positions within the inspection surface and shape information on the inspection surface stored in advance in a storage unit (the ROM 502, the HDD 504, or the like) of the defect detector 30.

The process of generating the point group data from the measurement data of the inspection surface may be executed by the image-capturing unit 20 or by the defect detector 30 (the determination unit 32). In one example, coordinate data constructing point group data may be converted using an integer conversion filter or the like, and the converted data may be combined with the shape information on the inspection surface. In another example, information on, for example, the posture or position of the inspection surface may be directly calculated from the point group data.

The display unit 33 displays a determination result of the determination unit 32. For example, the display unit 33 displays character information of a message indicating that a defect is present, or image information such as a figure or a sign. In addition, the display unit 33 may display an image or the like in focus on the detected defect portion.

### Functional Configuration of Controller

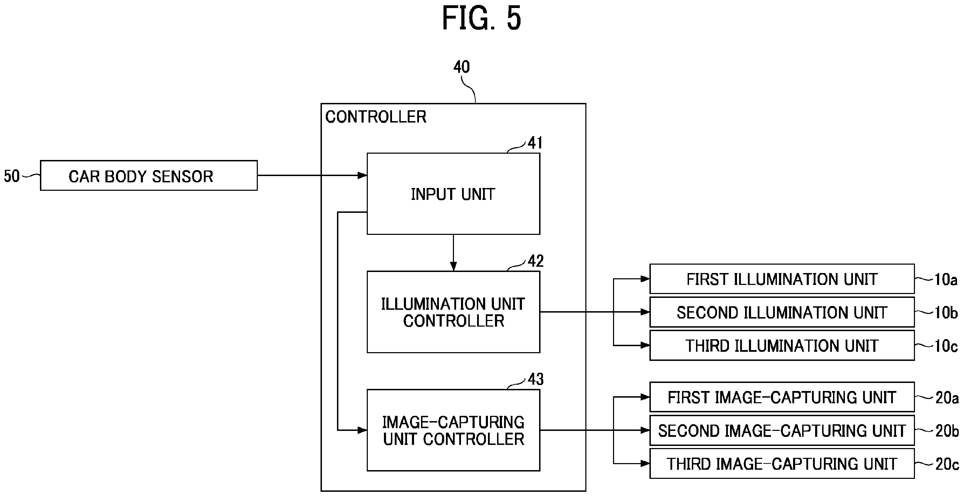

An example of a functional configuration of the controller 40 is described next referring to FIG. 5. FIG. 5 is a block diagram illustrating an example of a functional configuration of the controller 40 of the car body inspection device 1 according to the first embodiment of the disclosure.

The controller 40 includes an input unit 41, an illumination unit controller 42, and an image-capturing unit controller 43.

The input unit 41 is implemented by, for example, the input/output I/F 505 of the computer 500.

The illumination unit controller 42 and the image-capturing unit controller 43 are implemented by the CPU 501 of the computer 500.

The input unit 41 receives a detection signal of the car body 100 output from the car body sensor 50. For example, the illumination unit controller 42 and the image-capturing unit controller 43 operate in response to that the detection signal of the car body 100 is input from the car body sensor 50 to the input unit 41.

The illumination unit controller 42 controls each of the multiple illumination units 10. Specifically, the illumination unit controller 42 recognizes that the car body 100 has entered the inspection region 1E in response to the detection signal from the car body sensor 50, and causes each of the illumination units 10 to emit light.

In one example, the illumination unit controller 42 may cause the first illumination unit 10a, the second illumination unit 10b, and the third illumination unit 10c to emit light at the same timing. In another example, the illumination unit controller 42 may cause the first illumination unit 10a, the second illumination unit 10b, and the third illumination unit 10c to sequentially emit light in accordance with the conveyance of the car body 100. However, the control method of each illumination unit 10 by the illumination unit controller 42 is not limited thereto.

The image-capturing unit controller 43 controls each of the multiple image-capturing units 20. Specifically, the image-capturing unit controller 43 controls the image-capturing timing of each image-capturing unit 20 in accordance with the light emitting operation of the corresponding illumination unit 10.

For example, the image-capturing unit controller 43 operates the first image-capturing unit 20a in synchronization with the emission of light of the first illumination unit 10a. Thus, an image of the rear surface 100R illuminated with the light from the first illumination unit 10a can be captured. The image-capturing unit controller 43 operates the second image-capturing unit 20b in synchronization with the emission of light of the second illumination unit 10b. Thus, an image of the upper surface 100U illuminated with the light from the second illumination unit 10b can be captured. The image-capturing unit controller 43 operates the third image-capturing unit 20c in synchronization with the emission of light of the third illumination unit 10c. Thus, an image of the side surface 100S illuminated with the light from the third illumination unit 10c can be captured.

### Car Body Inspection Method

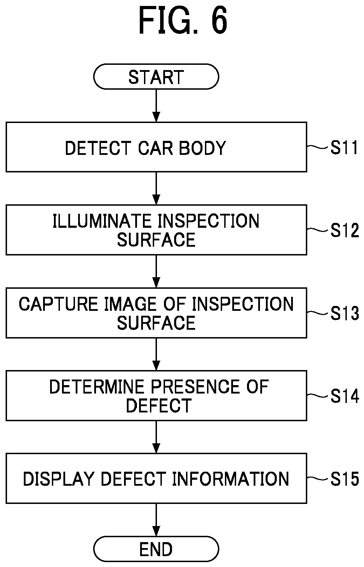

A car body inspection method using the car body inspection device 1 is described next referring to FIG. 6. FIG. 6 is a flowchart presenting a car body inspection method according to the first embodiment of the disclosure.

In step S11, the car body sensor 50 detects the car body 100 to be inspected that is conveyed by the conveyance unit 200 and that has reached the inspection region 1E. The car body sensor 50 outputs a detection signal to the controller 40.

In step S12, the detection signal is input to the input unit 41 of the controller 40. In response to this, the illumination unit controller 42 of the controller 40 causes each of the first illumination unit 10a, the second illumination unit 10b, and the third illumination unit 10c to emit light. In other words, the illuminator emits light to an inspection surface of the car body.

In step S 13, the image-capturing unit controller 43 of the controller 40 operates each of the first image-capturing unit 20a, the second image-capturing unit 20b, and the third image-capturing unit 20c. The operation of each image-capturing unit 20 is associated with the emission of light of the corresponding illumination unit 10. Thus, the first image-capturing unit 20a captures an image of the rear surface 100R of the car body 100, which is an inspection surface. The second image-capturing unit 20b captures an image of the upper surface 100U of the car body 100, which is another inspection surface. The third image-capturing unit 20c captures an image of the side surface 100S of the car body 100, which is still another inspection surface. Each of the image-capturing units 20 outputs captured image data to the defect detector 30.

In step S 14, the defect detector 30 analyzes the image data output from each of the image-capturing units 20 to determine whether the inspection surface includes a defect.

When the defect detector 30 determines that at least one of the inspection surfaces includes a defect in step S14, in step S 15, the defect detector 30 displays defect information indicating that a defect is included, on the display 506 of the defect detector 30. The defect information is not particularly limited as long as an inspection operator can be notified that the inspection surface includes a defect. Examples of the defect information include character information indicating that a defect is present or the position of the defect, image information such as a figure or a sign, and a combination of the character information and the image information. In addition, the defect detector 30 may output a control signal for stopping the conveyance unit 200 to a conveyance unit drive controller.

A car body inspection method includes emitting light (S12) to an inspection surface of a car body from a first position apart from the car body and on a first surface side of the car body; capturing (S13) an image of the inspection surface illuminated with the light emitted in the emitting at a second position apart from the car body and on a second surface side opposite the first surface side with the car body intervening between the first surface side and the second surface side; and detecting (S14) a defect of the inspection surface with the image captured in the capturing.

With these steps, the car body inspection method according to the embodiment is performed. However, the car body inspection method according to an embodiment of the disclosure may appropriately include another step in accordance with an inspection condition, an inspection environment, or the like.

### Modification

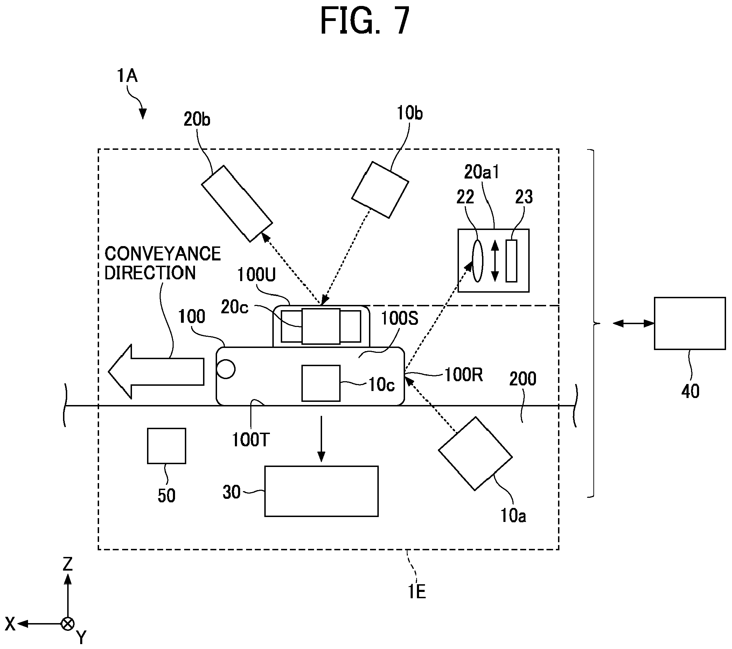

A car body inspection device 1A according to a modification of the first embodiment of the disclosure is described next referring to FIG. 7. FIG. 7 is a schematic diagram illustrating an example of a configuration of the car body inspection device 1A according to the modification of the first embodiment of the disclosure. FIG. 7 includes a side view of a car body 100 to be inspected. The detailed description of the components similar to those in the first embodiment is appropriately omitted.

In the car body inspection device 1A according to the modification, a configuration of a first image-capturing unit 20a1 that captures an image of a rear surface 100R of the car body 100 to be inspected differs from the configuration of the first image-capturing unit 20a of the car body inspection device 1 according to the first embodiment.

Specifically, the first image-capturing unit 20a1 includes a shift lens 22. The shift lens 22 includes a lens for forming an image of incident light (reflected light from the rear surface 100R) on an imaging element 23, and a shift mechanism that can move the lens in parallel in a predetermined direction such as the Z direction.

Since the shift lens 22 is used, an image of the rear surface 100R can be captured while the lens principal plane of the shift lens 22, the imaging surface of the imaging element 23, and the rear surface 100R are kept substantially parallel to one another.

Thus, the contour or the like of the rear surface 100R in the image is not distorted into, for example, a trapezoidal shape. Moreover, an image of the rear surface 100R that matches with the actual shape or dimensions can be obtained. With the car body inspection device 1A according to the modification, processing such as distortion correction does not have to be performed on the image data captured by the first image-capturing unit 20a1, and information on a feature value such as the size of a defect can be more correctly obtained. Consequently, processing load of defect detection can be reduced, and detection accuracy for a defect can be increased.

Even when multiple first image-capturing units 20a1 are used to capture images of the entire rear surface 100R, a discontinuous point or the like does not appear in a combined image of respective images captured by the multiple first image-capturing units 20a1. Consequently, for example, the image processing by the defect detector 30 can be simplified and detection accuracy for a defect can be increased.

The first image-capturing unit 20a1 may further include a tilt mechanism that can adjust the angle of the lens. A second image-capturing unit 20b that captures an image of the upper surface 100U of the car body 100 or a third image-capturing unit 20c that captures an image of the side surface 100S of the car body 100 may include the shift lens 22 or the tilt mechanism.

### Second Embodiment

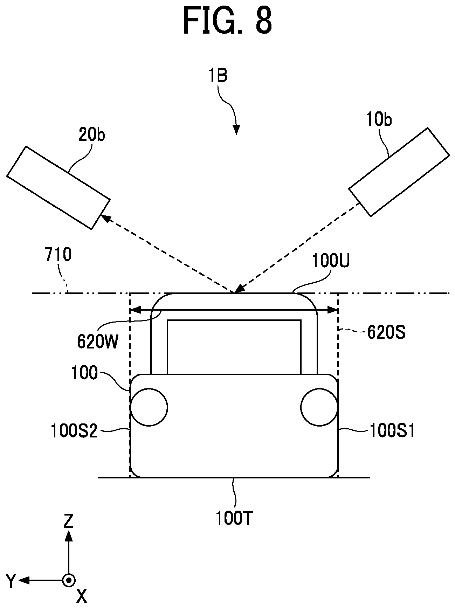

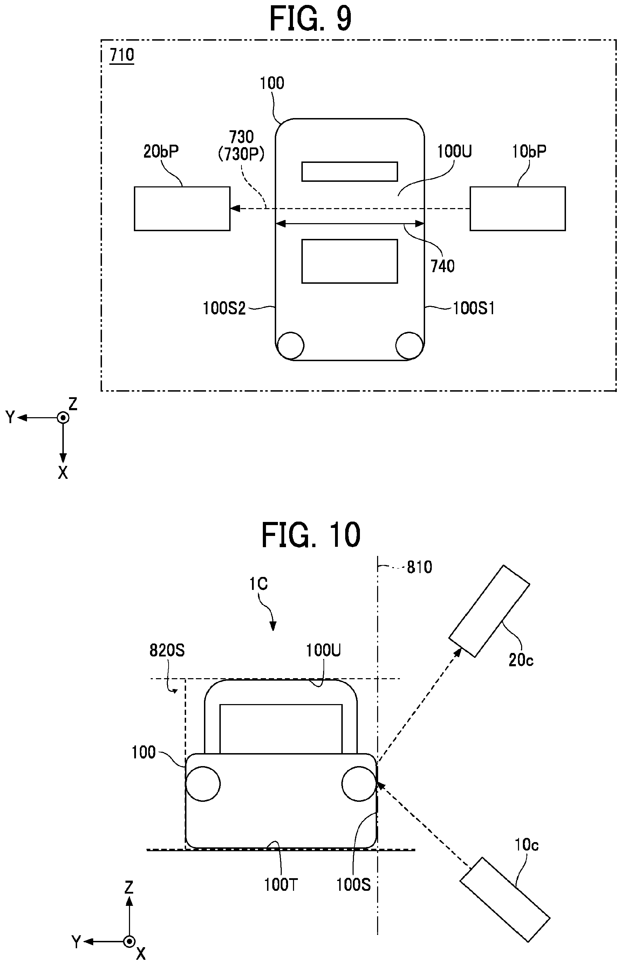

A car body inspection device 1B according to a second embodiment of the disclosure is described next referring to FIGs. 8 and 9. FIG. 8 is a schematic diagram illustrating an example of a configuration of the car body inspection device 1B according to the second embodiment of the disclosure. FIG. 8 includes a front view of a car body 100 to be inspected. FIG. 9 is a projection diagram of a second illumination unit 10b and a second image-capturing unit 20b of the car body inspection device 1B according to the second embodiment of the disclosure projected on a plane 710 including an upper surface 100U of the car body 100. FIGs. 8 and 9 illustrate a right side surface 100S1 and a left side surface 100S2 of the car body 100. FIG. 9 illustrates a projection image 10bP, a projection image 20bP, a light path 730, and a length 740.

The detailed description of the components similar to those in the first embodiment and the modification of the first embodiment is appropriately omitted. The car body inspection device 1B according to the second embodiment includes a first illumination unit 10a, a second illumination unit 10b, a third illumination unit 10c, a first image-capturing unit 20a, a second image-capturing unit 20b, and a third image-capturing unit 20c. The car body inspection device 1B performs an appearance inspection on a rear surface 100R and a side surface 100S in addition to the upper surface 100U of the car body 100.

The second embodiment has a characteristic in the positional relationship of the second illumination unit 10b and the second image-capturing unit 20b with respect to the car body 100. In this case, a direction 620W illustrated in FIG. 8 corresponds to the upper surface 100U extending in an orthogonal direction intersecting with the conveyance direction of the car body 100. The direction 620W corresponds to an inspection surface.

To inspect the upper surface 100U extending in the direction 620W intersecting with the conveyance direction without changing the conveyance direction of the car body 100, the second illumination unit 10b and the second image-capturing unit 20b are disposed outside a conveyance region 620S of the car body 100.

Specifically, at least one pair of a second illumination unit 10b and a second image-capturing unit 20b are spaced apart from the car body 100 and respectively located on a first surface side and a second surface side with the car body 100 interposed. The configuration of the at least one pair of the second illumination unit 10b and the second image-capturing unit 20b may be a pair of a second image-capturing unit 20b including one camera and a second illumination unit 10b including multiple light sources. In FIG. 8, the second illumination unit 10b is disposed outward of the right side surface 100S1 of the car body 100. The second image-capturing unit 20b is disposed outward of the left side surface 100S2 of the car body 100.

That is, when the second illumination unit 10b and the second image-capturing unit 20b are projected on the plane 710 including the upper surface 100U, as illustrated in FIG. 9, the projection image 10bP of the second illumination unit 10b is located rightward of the car body 100, and the projection image 20bP of the second image-capturing unit 20b is located leftward of the car body 100. The projection images 10bP and 20bP are spaced apart from the car body 100.

In this case, a right side of the car body 100 corresponds to a "first surface side" of the car body 100, and a left side of the car body 100 corresponds to a "second surface side" of the car body 100. An "end portion of the first surface side of the car body 100" corresponds to the right side surface 100S1 of the car body 100. An "end portion of the second surface side of the car body 100" corresponds to the left side surface 100S2 of the car body 100. In contrast, when the second illumination unit 10b is disposed outward of the left side surface 100S2 of the car body 100 and the second image-capturing unit 20b is disposed outward of the right side surface 100S1 of the car body 100, the left side of the car body 100 corresponds to the "first surface side" of the car body 100, and the right side of the car body 100 corresponds to the "second surface side" of the car body 100.

The light path 730 is a light path from emission of light from the second illumination unit 10b to incidence of the light on the second image-capturing unit 20b. The length 740 indicates a distance from the end portion of the first surface side to the end portion of the second surface side of the car body 100 as a predetermined length of the car body 100. The length 740 illustrated in FIG. 9 is a car width and is a length from the right side surface 100S1 to the left side surface 100S2 of the car body 100. The light path 730 is longer than the length 740. More precisely, the length of a projection line 730P of the light path 730 projected on the plane 710 is larger than the length 740 between the right side surface 100S1 and the left side surface 100S2 of the car body 100.

Since the second illumination unit 10b and the second image-capturing unit 20b are disposed in this way, an appearance inspection can be performed on each of the surfaces of the car body 100 including the upper surface 100U without the second illumination unit 10b and the second image-capturing unit 20b each colliding with the car body 100 that is conveyed by the conveyance unit 200. That is, simply by conveying the car body 100 in one conveyance direction, the appearance inspection can be performed on each of the surfaces of the car body 100. Consequently, the time for the appearance inspection can be reduced, and productivity of the car body 100 can be increased.

When the upper surface 100U is inspected, the conveyance direction of the car body 100 does not have to be changed from the conveyance direction in a typical inspection line. That is, an existing inspection line can be used without a change, thereby avoiding an excessive increase in cost due to, for example, an improvement in inspection equipment.

### Third Embodiment

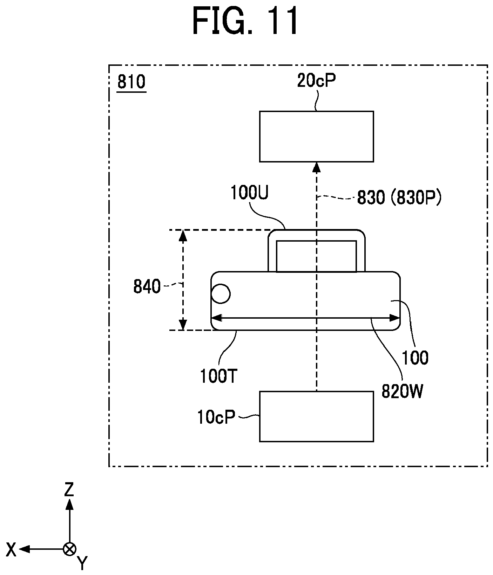

A car body inspection device 1C according to a third embodiment of the disclosure is described next referring to FIGs. 10 and 11. FIG. 10 is a schematic diagram illustrating an example of a configuration of the car body inspection device 1C according to the third embodiment of the disclosure. FIG. 10 includes a front view of a car body 100 to be inspected. FIG. 11 is a projection diagram of a third illumination unit 10c and a third image-capturing unit 20c of the car body inspection device 1C according to the third embodiment of the disclosure projected on a plane 810 including a side surface 100S of the car body 100.

The detailed description of the components similar to those in the first embodiment, the modification of the first embodiment, and the second embodiment is appropriately omitted. The car body inspection device 1C according to the third embodiment includes a first illumination unit 10a, a second illumination unit 10b, a third illumination unit 10c, a first image-capturing unit 20a, a second image-capturing unit 20b, and a third image-capturing unit 20c. The car body inspection device 1C performs an appearance inspection on a rear surface 100R and an upper surface 100U in addition to the side surface 100S of the car body 100.

The third embodiment has a characteristic in the positional relationship of the third illumination unit 10c and the third image-capturing unit 20c with respect to the car body 100. A direction 820W illustrated in FIG. 11 is the conveyance direction of the car body 100. The direction 820W corresponds to the side surface 100S in a horizontal direction intersecting with the conveyance direction of the car body 100. The direction 820W corresponds to an inspection surface.

To inspect the side surface 100S extending in the direction 820W intersecting with the conveyance direction without changing the conveyance direction of the car body 100, the third illumination unit 10c and the third image-capturing unit 20c are disposed outside a conveyance region 820S of the car body 100.

Specifically, at least one pair of a third illumination unit 10c and a third image-capturing unit 20c are spaced apart from the car body 100 and respectively located on a first surface side and a second surface side with the car body 100 interposed. The configuration of the at least one pair of the third illumination unit 10c and the third image-capturing unit 20c may be a pair of a third image-capturing unit 20c including one camera and a third illumination unit 10c including multiple light sources. In FIG. 10, the third illumination unit 10c is disposed outward of a bottom surface 100T of the car body 100.

The third image-capturing unit 20c is disposed outward of the upper surface 100U of the car body 100.

That is, when the third illumination unit 10c and the third image-capturing unit 20c are projected on the plane 810 including the side surface 100S, as illustrated in FIG. 11, a projection image 10cP of the third illumination unit 10c is located downward of the car body 100, and a projection image 20cP of the third image-capturing unit 20c is located upward of the car body 100. The projection images 10cP and 20cP are spaced apart from the car body 100.

In this case, a lower side of the car body 100 corresponds to a "first surface side" of the car body 100, and an upper side of the car body 100 corresponds to a "second surface side" of the car body 100. An "end portion of the first surface side of the car body 100" corresponds to the bottom surface 100T of the car body 100. An "end portion of the second surface side of the car body 100" corresponds to the upper surface 100U of the car body 100. In contrast, when the third illumination unit 10c is disposed outward of the upper surface 100U of the car body 100 and the third image-capturing unit 20c is disposed outward of the bottom surface 100T of the car body 100, the upper side of the car body 100 corresponds to the "first surface side" of the car body 100, and the lower side of the car body 100 corresponds to the "second surface side" of the car body 100.

A light path 830 is a light path from emission of light from the third illumination unit 10c to incidence of the light on the third image-capturing unit 20c. A length 840 indicates a distance from one side to the other side in the Z direction as a predetermined length of the car body 100. The length 840 illustrated in FIG. 11 is a total height that is a distance between a ground plane and a horizontal plane in contact with the highest portion of the car body 100, and is a length from the bottom surface 100T to the upper surface 100U of the car body 100. The length 840 may be in a state in which tires are attached to the car body 100 or in a state in which the tires are not attached to the car body 100. The light path 830 is longer than the length 840. More precisely, the length of a projection line 830P of the light path 830 projected on the plane 810 is larger than the length 840 from the bottom surface 100T to the upper surface 100U of the car body 100.

According to the third embodiment, even when the conveyance direction of the car body 100 is the Y direction, all the multiple illumination units 10 and all the multiple image-capturing units 20 do not collide with the car body 100 that is conveyed by the conveyance unit 200.

That is, simply by conveying the car body 100 in one conveyance direction, the appearance inspection can be performed on each of the surfaces of the car body 100. Consequently, the time for the appearance inspection can be reduced, and productivity of the car body 100 can be increased.

In the case of the third embodiment, even when the conveyance direction of the car body 100 is the X direction, all the multiple illumination units 10 and all the multiple image-capturing units 20 do not collide with the car body 100 that is conveyed by the conveyance unit 200.

Thus, the car body inspection device 1C can be applied to a case where the car body 100 is conveyed in multiple conveyance directions, thereby increasing the flexibility of design of the inspection line.

### Fourth Embodiment

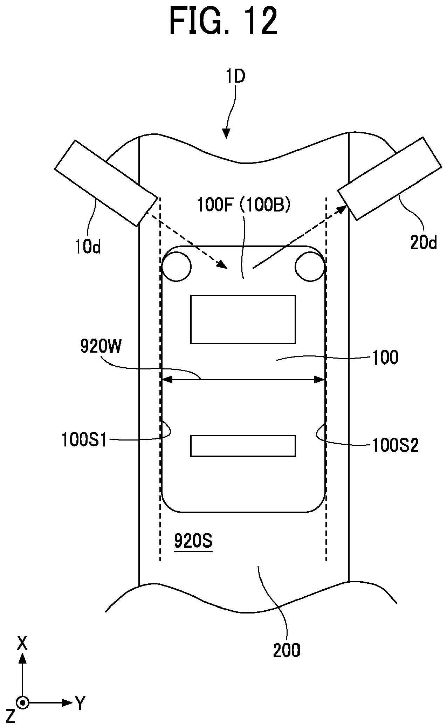

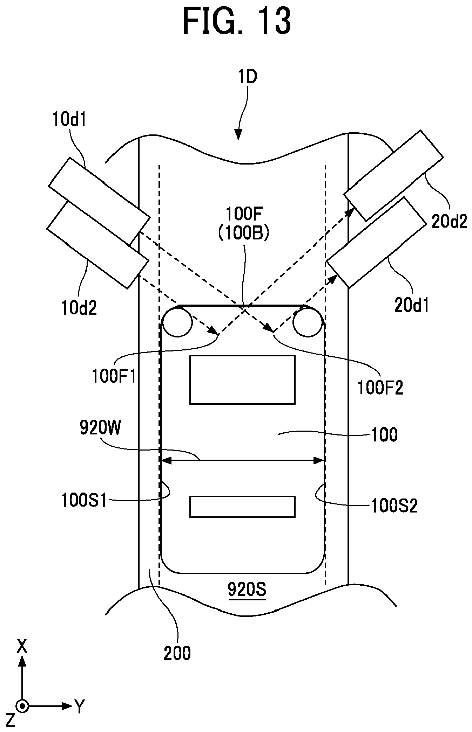

A car body inspection device 1D according to a fourth embodiment of the disclosure is described next referring to FIGs. 12 and 13. FIG. 12 is a schematic diagram illustrating an example of a configuration of the car body inspection device 1D according to the fourth embodiment of the disclosure. FIG. 13 is a schematic diagram illustrating another example of the configuration of the car body inspection device 1D according to the fourth embodiment of the disclosure. FIGs. 12 and 13 include a plan view of a car body 100 to be inspected. The detailed description of the components similar to those in the first embodiment, the modification of the first embodiment, the second embodiment, and the third embodiment is appropriately omitted.

The car body inspection device 1D according to the fourth embodiment further includes a fourth illumination unit 10d that illuminates a front surface 100F of the car body 100, and a fourth image-capturing unit 20d that captures an image of the front surface 100F illuminated by the fourth illumination unit 10d.

The car body inspection device 1D according to the fourth embodiment includes a first illumination unit 10a, a second illumination unit 10b, and a third illumination unit 10c; and a first image-capturing unit 20a, a second image-capturing unit 20b, and a third image-capturing unit 20c. That is, the car body inspection device 1D according to the fourth embodiment performs an appearance inspection on a rear surface 100R, an upper surface 100U, and a side surface 100S in addition to the front surface 100F of the car body 100.

A direction 920W corresponds to the front surface 100F extending in an orthogonal direction intersecting with the conveyance direction of the car body 100. The direction 920W corresponds to an inspection surface. The inspection surface illustrated in FIGs. 12 and 13 corresponds to a hood surface 100B included in the front surface 100F.

To inspect the front surface 100F extending in the direction 920W intersecting with the conveyance direction without changing the conveyance direction of the car body 100, the fourth illumination unit 10d and the fourth image-capturing unit 20d are disposed outside a conveyance region 920S of the car body 100.

Specifically, at least one pair of a fourth illumination unit 10d and a fourth image-capturing unit 20d are spaced apart from the car body 100 and respectively located on a first surface side and a second surface side with the car body 100 interposed. The configuration of the at least one pair of the fourth illumination unit 10d and the fourth image-capturing unit 20d may be a pair of a fourth image-capturing unit 20d including one camera and a fourth illumination unit 10d including multiple light sources. In FIG. 12, the fourth illumination unit 10d is disposed outward of a right side surface 100S1 of the car body 100. The fourth image-capturing unit 20d is disposed outward of a left side surface 100S2 of the car body 100.

In this case, a right side of the car body 100 corresponds to a "first surface side" of the car body 100, and a left side of the car body 100 corresponds to a "second surface side" of the car body 100. An "end portion of the first surface side of the car body 100" corresponds to the right side surface 100S1 of the car body 100. An "end portion of the second surface side of the car body 100" corresponds to the left side surface 100S2 of the car body 100. In contrast, when the fourth illumination unit 10d is disposed outward of the left side surface 100S2 of the car body 100 and the fourth image-capturing unit 20d is disposed outward of the right side surface 100S1 of the car body 100, the left side of the car body 100 corresponds to the "first surface side" of the car body 100, and the right side of the car body 100 corresponds to the "second surface side" of the car body 100.

Since the fourth illumination unit 10d and the fourth image-capturing unit 20d are disposed in this way, an appearance inspection can be performed on each of the surfaces of the car body 100 including the front surface 100F without the fourth illumination unit 10d and the fourth image-capturing unit 20d each colliding with the car body 100 that is conveyed by the conveyance unit 200. That is, simply by conveying the car body 100 in one conveyance direction, the appearance inspection can be performed on each of the surfaces of the car body 100. Consequently, the time for the appearance inspection can be reduced, and productivity of the car body 100 can be increased.

As illustrated in FIG. 13, two or more fourth illumination units 10d that illuminate respective different areas of the front surface 100F may be provided. Two or more fourth image-capturing units 20d may be provided to capture images of respective areas of the front surface 100F illuminated by different fourth illumination units 10d included in the two or more fourth illumination units 10d.

That is, an image of a first area 100F1 of the front surface 100F illuminated by a first fourth illumination unit 10d1 is captured by a first fourth image-capturing unit 20d1. An image of a second area 100F2 of the front surface 100F illuminated by a second fourth illumination unit 10d2 is captured by a second fourth image-capturing unit 20d2.

As described above, two or more sets of inspection optical systems each including a pair of the fourth illumination unit 10d and the fourth image-capturing unit 20d are provided, and image data of different areas of the front surface 100F are obtained by the respective sets of the inspection optical systems. That is, image data focused on a specific area of the front surface 100F can be obtained by each set of the inspection optical system. Thus, detection accuracy for a defect can be increased as compared with a case where one image-capturing unit 20 captures an image of the entire front surface 100F. This is effective, for example, when the fourth illumination unit 10d or the fourth image-capturing unit 20d is to be provided at a position distant from the car body 100 in relation to the facility environment around the inspection line or the like, and when the resolution of each captured image data is low.

The example has been described in which the set of the inspection optical system includes a pair of the fourth illumination unit 10d and the fourth image-capturing unit 20d; however, a similar configuration can be applied to another illumination unit 10 and another image-capturing unit 20. That is, two or more sets of inspection optical systems each including a pair of the first illumination unit 10a and the first image-capturing unit 20a may be provided. Two or more sets of inspection optical systems each including a pair of the second illumination unit 10b and the second image-capturing unit 20b may be provided. Two or more sets of inspection optical systems each including a pair of the third illumination unit 10c and the third image-capturing unit 20c may be provided.

The embodiments have been described above; however, the present disclosure is not limited to the above-described embodiments and can be modified and improved in various ways within the scope of the disclosure.

Aspects of the present disclosure are, for example, as follows.

### Aspect 1

In Aspect 1, a car body inspection device includes an illumination unit (or an illuminator) that illuminates an inspection surface of a car body conveyed in one direction; an image-capturing unit (or an imager) that captures an image of the inspection surface illuminated by the illumination unit; and a defect detector that detects a defect of the inspection surface with the image captured by the image-capturing unit. The illumination unit and the image-capturing unit are spaced apart from the car body and respectively located on a first surface side and a second surface side with the car body interposed. In other words, the illuminator is spaced apart from the car body and located on a first surface side of the car body, and the imager is spaced apart from the car body and located on a second surface side opposite the first surface side with the car body intervening between the first surface side and the second surface side.

### Aspect 2

According to Aspect 2, in the car body inspection device of Aspect 1, a light path of light that is emitted from the illumination unit located on the first surface side and that is incident on the image-capturing unit located on the second surface side is longer than a length between an first end portion of the first surface side and a second end portion of the second surface side of the car body.

### Aspect 3

According to Aspect 3, in the car body inspection device of Aspect 1 or Aspect 2, the image-capturing unit includes a shift lens that moves in parallel to the inspection surface.

### Aspect 4

According to Aspect 4, in the car body inspection device of any one of Aspect 1 to Aspect 3, the inspection surface is a rear surface or a hood surface of the car body, the rear surface or the hood surface being perpendicular to a conveyance direction in which the car body is conveyed. In other words, wherein the inspection surface has a rear surface or a hood surface of the car body, and the rear surface or the hood surface is perpendicular to the one direction.

### Aspect 5

According to Aspect 5, in the car body inspection device of any one of Aspect 1 to Aspect 4, the illumination unit includes multiple illumination units, and the multiple illumination units include a first illumination unit and a second illumination unit; the image-capturing unit includes multiple image-capturing units, and the multiple image-capturing units include a first image-capturing unit and a second image-capturing unit; the inspection surface includes multiple inspection surfaces extending in a direction intersecting with a conveyance direction in which the car body is conveyed, and the multiple inspection surfaces include a first inspection surface and a second inspection surface; the first inspection surface is illuminated by the first illumination unit, and an image of the first inspection surface illuminated by the first illumination unit is captured by the first image-capturing unit; and the second inspection surface is illuminated by the second illumination unit, and an image of the second inspection surface illuminated by the second illumination unit is captured by the second image-capturing unit.

In other words, the car body inspection device further includes multiple inspection surfaces (e.g., the rear surface 100R, the upper surface 100U, the side surface 100S) including the inspection surface, each of the multiple inspection surfaces extending in a direction perpendicular to the one direction in which the car body is conveyed; multiple illuminators including the illuminator (e.g., the illumination unit 10); and multiple imagers including the imager (e.g., the image-capturing unit 20). The multiple illuminators include a first illuminator (e.g., the first illumination unit 10a) to emit light to a first inspection surface of the multiple inspection surfaces; and a second illuminator (e.g., the second illumination unit 10b) to emit light to a second inspection surface different from the first inspection surface of the multiple inspection surfaces. The multiple imagers include a first imager (i.e., the first image-capturing unit 20a) to capture an image of the first inspection surface illuminated with the light emitted from the first illuminator; and a second imager (i.e., the second image-capturing unit 20b) to capture an image of the second inspection surface illuminated with the light emitted from the second illuminator.

### Aspect 6

In Aspect 6, a car body inspection method includes providing an illumination unit and an image-capturing unit such that the illumination unit and the image-capturing unit are spaced apart from a car body that is conveyed and are respectively located on a first surface side and a second surface side with the car body interposed; illuminating an inspection surface of the car body using the illumination unit; capturing an image of the inspection surface illuminated by the illumination unit using the image-capturing unit; and detecting a defect of the inspection surface with the image captured by the image-capturing unit.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A car body inspection device (1) comprising:
an illuminator (10) to emit light to an inspection surface of a car body conveyed in one direction, the illuminator (10) is spaced apart from the car body and located on a first surface side of the car body;
an imager (20) to capture an image of the inspection surface illuminated with the light emitted from the illuminator (10), the imager (20) is spaced apart from the car body and located on a second surface side opposite the first surface side with the car body intervening between the first surface side and the second surface side; and
a defect detector (30) to detect a defect of the inspection surface with the image captured by the imager (20).

2. The car body inspection device (1) according to claim 1,
wherein a light path of the light emitted from the illuminator (10) and incident on the imager (20) is longer than a length between a first end of the first surface side of the car body and a second end of the second surface side of the car body.

3. The car body inspection device (1) according to claim 1 or 2,
wherein the imager (20) includes a shift lens that moves in parallel to the inspection surface.

4. The car body inspection device (1) according to claim 1 or 2,
wherein the inspection surface has a rear surface or a hood surface of the car body, and
the rear surface or the hood surface is perpendicular to the one direction.

5. The car body inspection device (1) according to claim 1 or 2, further comprising:
multiple inspection surfaces (100R, 100U, 100S) including the inspection surface, each of the multiple inspection surfaces extending in a direction perpendicular to the one direction;
multiple illuminators including the illuminator (10); and
multiple imagers including the imager (20),
the multiple illuminators including:
a first illuminator (10a) to emit light to a first inspection surface of the multiple inspection surfaces; and
a second illuminator (10b) to emit light to a second inspection surface different from the first inspection surface of the multiple inspection surfaces,
the multiple imagers including:
a first imager (20a) to capture an image of the first inspection surface illuminated with the light emitted from the first illuminator (10a); and
a second imager (20b) to capture an image of the second inspection surface illuminated with the light emitted from the second illuminator (10b).

6. A car body inspection method comprising:
emitting light (S12) to an inspection surface of a car body from a first position apart from the car body and on a first surface side of the car body;
capturing (S 13) an image of the inspection surface illuminated with the light emitted in the emitting at a second position apart from the car body and on a second surface side opposite the first surface side with the car body intervening between the first surface side and the second surface side; and
detecting (S14) a defect of the inspection surface with the image captured in the capturing.
